# FASCICULE DE BREVET EUROPEEN

(11) **EP 3 158 152 B1**
(45) Date de publication et mention de la délivrance du brevet: **29.01.2020**
(21) Numéro de dépôt: 15731644.9
(22) Date de dépôt: 22.05.2015
(51) Int. Cl.: E05B 83/24

(54) **SYSTEME D'OUVERTURE/FERMETURE D'UN CAPOT**
SYSTEM ZUM ÖFFNEN/SCHLIESSEN EINER MOTORHAUBE
SYSTEM FOR OPENING/CLOSING A BONNET

(30) Priorité: 20.06.2014 FR 1455699
(43) Date de publication de la demande: 26.04.2017
(73) Titulaire: Renault SAS, 92100 Boulogne Billancourt (FR)
(72) Inventeur: PERREUX, Philippe, F-78620 L'Etang la Ville (FR)
(86) Numéro de dépôt international: PCT/FR2015/051356
(87) Numéro de publication internationale: WO 2015/193571

(56) Documents cités:
- GB-A- 1 281 399
- US-A- 2 723 552
- US-A- 3 199 322
- US-A- 3 347 071

## Description

La présente invention concerne un système d'ouverture/fermeture d'un capot d'un véhicule comprenant un élément de manœuvre manuelle, notamment mobile en rotation.

L'invention concerne également un véhicule comprenant un tel système d'ouverture/fermeture.

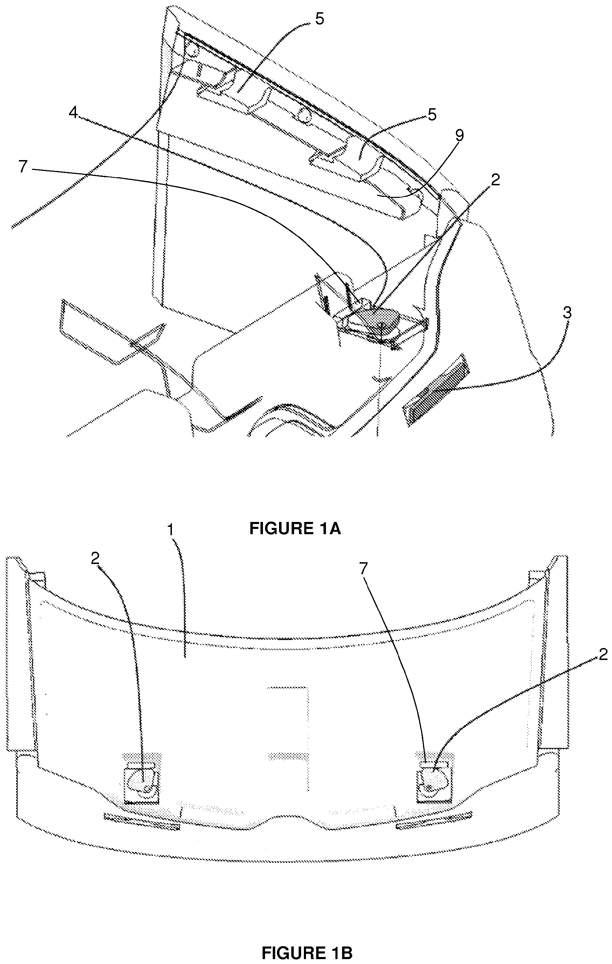

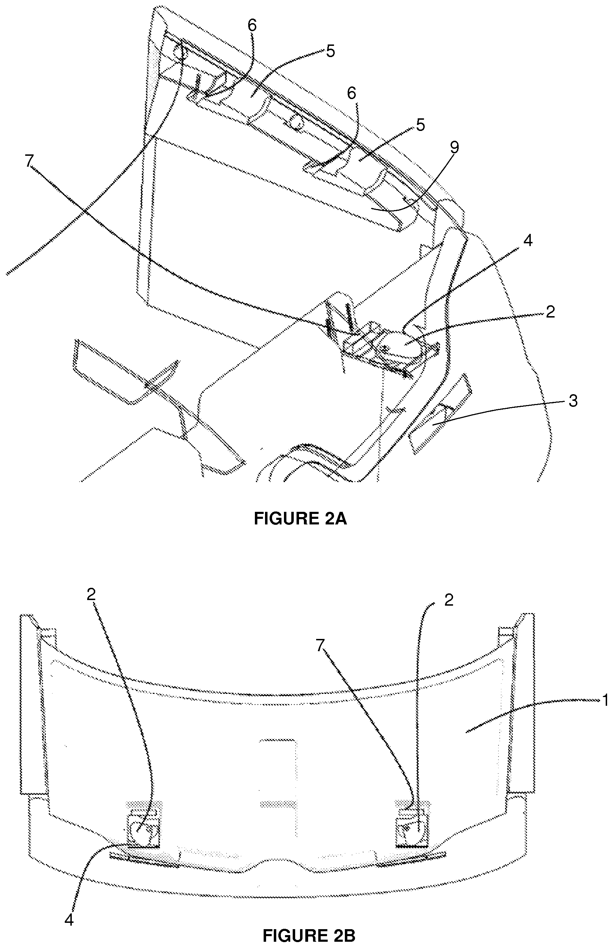

Dans l'art antérieur illustré sur les figures 1A, 1B, 2A et 2B, de tels systèmes d'ouverture/fermeture d'un capot 1 de véhicule sont mis en œuvre au niveau d'une partie avant du véhicule. Ces systèmes d'ouverture/fermeture comprennent de manière générale un élément d'actionnement 3 et au moins un élément d'entraînement 2 (ici deux).

Par la manipulation de l'élément d'actionnement 3 qui peut correspondre à un levier, l'élément d'entraînement 2 est apte à varier de position par rotation et à provoquer alors le blocage du capot sur la caisse du véhicule (figures 1A et 1B) ou inversement le déblocage du capot de la caisse (Figure 2A et 2B).

Pour ce faire, l'élément d'entraînement 2 est muni d'une surface de came 4 configurée pour coopérer avec un élément d'appui 7 solidaire du capot 1 de sorte à entraîner le coulissement du capot 1 vers l'arrière du véhicule en provoquant l'insertion de pattes d'accrochage 5 du capot 1 dans des logements 6 de retenue d'un support de capot 9, dans le cas par exemple du blocage du capot 1 sur la caisse du véhicule. Dans le cas du déblocage du capot 1, l'élément d'actionnement 3 est manipulé de sorte ce que l'élément d'entraînement 2 ne prenne plus appui sur l'élément d'appui 7 et autorise ainsi le coulissement du capot 1 vers l'avant du véhicule.

Cependant, un des inconvénients majeur de tels systèmes d'ouverture/fermeture est qu'ils ne présentent pas une sécurité suffisante pour protéger l'accès au compartiment couvert par le capot. En effet par la simple manipulation de l'élément d'actionnement de ces systèmes d'ouverture/fermeture, un individu mal intentionné peut alors accéder librement à ce compartiment.

De plus, de tels systèmes d'ouverture/fermeture non sécurisés sont contraires aux réglementations ou exigences commerciales ou d'assureurs dans certains pays qui obligent à prévoir un système démontrant l'inviolabilité du compartiment sous capot.

Le système d'ouverture/fermeture de capot selon US3347071 comprend un élément de manœuvre apte à maintenir ou libérer un crochet solidaire du capot. Le système comprend également un mécanisme de verrouillage/déverrouillage de l'élément de manœuvre.

La présente invention a pour objet de remédier en tout ou partie aux différents inconvénients cités précédemment.

Dans ce dessein, l'invention concerne un système d'ouverture/fermeture d'un capot de véhicule comprenant un élément de manœuvre manuelle, notamment mobile en rotation sur un élément de structure, apte à commander la mise en place du capot sur une caisse du véhicule, le système comprenant un mécanisme de verrouillage/déverrouillage de l'élément de manœuvre, ledit élément de manœuvre manuelle comprend un corps pourvu d'un élément d'actionnement, notamment un levier, sur lequel est situé un élément d'accroche ou d'accrochage destiné à coopérer avec l'élément de structure afin de maintenir l'élément de manœuvre manuelle dans une position ouverte ou fermée de maintien réversible lorsque l'élément d'actionnement a été manipulé.

Dans d'autres modes de réalisation :
- le mécanisme de verrouillage/déverrouillage comprend une première partie et une deuxième partie qui sont aptes à coopérer entre elles pour assurer le blocage dudit élément de manœuvre manuelle ;
- une première partie du mécanisme de verrouillage/déverrouillage comprend un module de liaison, un bras mobile et un dispositif de commande dudit bras mobile ;
- l'élément de manœuvre manuelle et un module de liaison sont montés dans un élément de structure, notamment un renfort de bouclier du véhicule ;
- un module de liaison est apte à relier un bras mobile et un dispositif de commande à un élément de structure du véhicule;
- une deuxième partie du mécanisme de verrouillage/déverrouillage comprend une butée agencée au niveau d'un élément d'actionnement de l'élément de manœuvre manuelle ;
- un bras mobile est pourvu d'une extrémité libre qui est courbée, et
- une butée agencée sur un élément d'actionnement a une forme en U complémentaire à celle de l'extrémité libre d'un bras mobile.

L'invention concerne également un véhicule comprenant un tel système d'ouverture/fermeture d'un capot.

D'autres avantages et caractéristiques de l'invention apparaîtront mieux à la lecture de la description de deux modes de réalisation préférés qui vont suivre, en référence aux figures, réalisés à titre d'exemple indicatif et non limitatif :
- les figure 1A, 1B, 2A et 2B représentent une partie avant d'un véhicule mettant en œuvre un système d'ouverture/fermeture d'un capot de l'état de l'art ;
- la figure 3 représente une vue d'une face avant d'un élément de structure du véhicule comprenant le système d'ouverture/fermeture de capot selon les modes de réalisation de l'invention ;
- la figure 4 est une vue de dessus de l'élément de structure du véhicule comprenant le système d'ouverture/fermeture de capot selon les modes de réalisation de l'invention ;
- la figure 5 est une vue de profil de l'élément de structure du véhicule comprenant le système d'ouverture/fermeture de capot selon les modes de réalisation de l'invention ;
- la figure 6 est une vue à plus grande échelle d'une partie A de la figure 3 selon les modes de réalisation de l'invention ;
- la figure 7 est une vue d'une face arrière de l'élément de structure du véhicule comprenant le système d'ouverture/fermeture du capot selon le premier mode de réalisation de l'invention ;
- la figure 8 est une vue à grande échelle d'une partie C de la figure 7 selon le premier mode réalisation de l'invention ;
- la figure 9A est une vue d'une face avant du système d'ouverture/fermeture selon le premier mode de réalisation de l'invention ;
- figure 9B est une vue d'une face arrière du système d'ouverture/fermeture selon le premier mode de réalisation de l'invention ;
- la figure 10 est une vue d'une face arrière d'un élément de manœuvre manuelle du système d'ouverture/fermeture selon le premier mode de réalisation de l'invention
- la figure 11 est une vue éclatée d'une première partie d'un mécanisme de verrouillage/déverrouillage du système d'ouverture/fermeture selon le premier mode de réalisation de l'invention ;
- la figure 12 est une vue d'une face arrière de l'élément de structure du véhicule comprenant le système d'ouverture/fermeture de capot selon le deuxième mode de réalisation de l'invention ;
- la figure 13 est une vue à grande échelle d'une partie D de la figure 12 selon le deuxième mode réalisation de l'invention ;
- la figure 14A est une vue d'une face avant du système d'ouverture/fermeture selon le deuxième mode de réalisation de l'invention ;
- la figure 14B est une vue d'une face arrière du système d'ouverture/fermeture selon le deuxième mode de réalisation de l'invention ;
- la figure 15 est une vue d'une face avant d'un élément de manœuvre manuelle du système d'ouverture/fermeture selon le deuxième mode de réalisation de l'invention, et
- la figure 16 est une vue éclatée d'une première partie d'un mécanisme de verrouillage/déverrouillage du système d'ouverture/fermeture selon le deuxième mode de réalisation de l'invention ;

La description est faite en référence à un repère orthonormé (X, Y, Z) associé classiquement à un véhicule automobile, dans lequel X est la direction longitudinale avant-arrière du véhicule dirigée vers l'avant, Y est la direction transversale droite-gauche qui est horizontale et perpendiculaire à X, dirigée vers la droite, et Z est la direction verticale dirigée vers le haut.

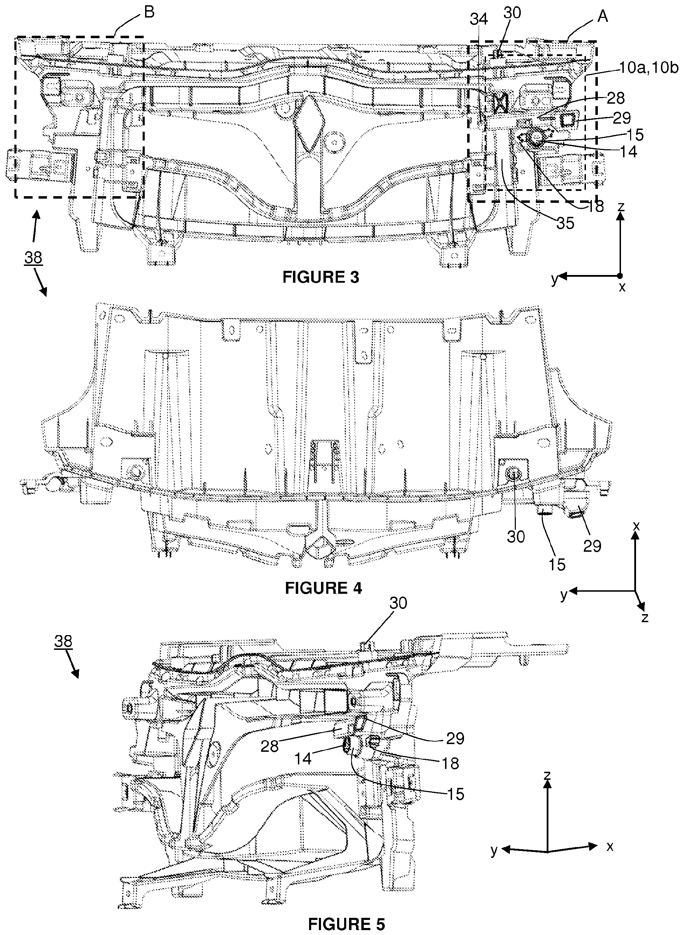

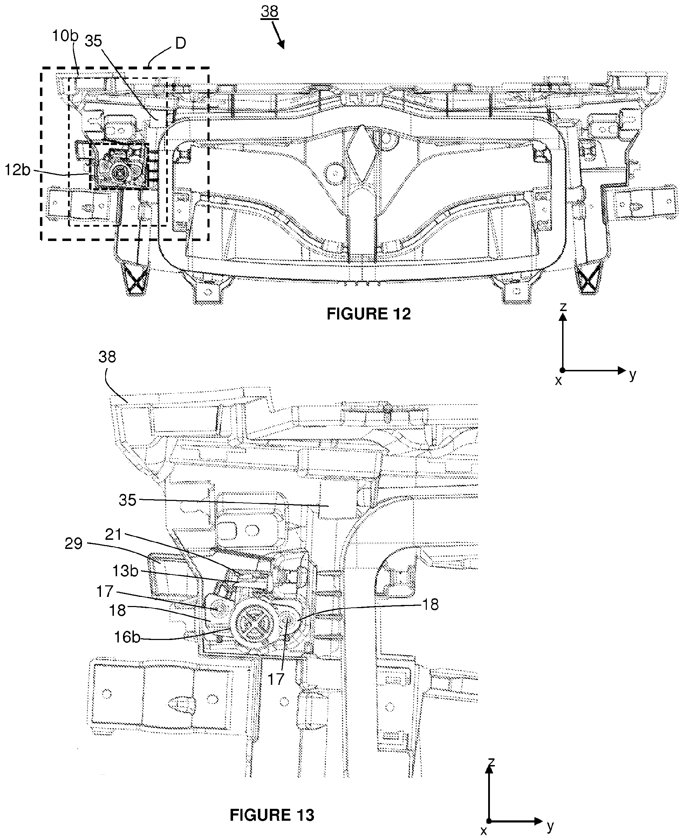

Dans les modes de réalisation de l'invention, le système d'ouverture/fermeture 10a, 10b du capot est monté dans un élément de structure 38 du véhicule. Cet élément de structure 38 correspond par exemple à un renfort de bouclier qui est illustré sur les figures 3 à 8, 12 et 38.

Cet élément de structure 38 est prévu pour être agencé au niveau de la partie avant du véhicule. Il est apte à coopérer de manière non limitative avec une calandre, un bouclier avant et/ou le capot du véhicule.

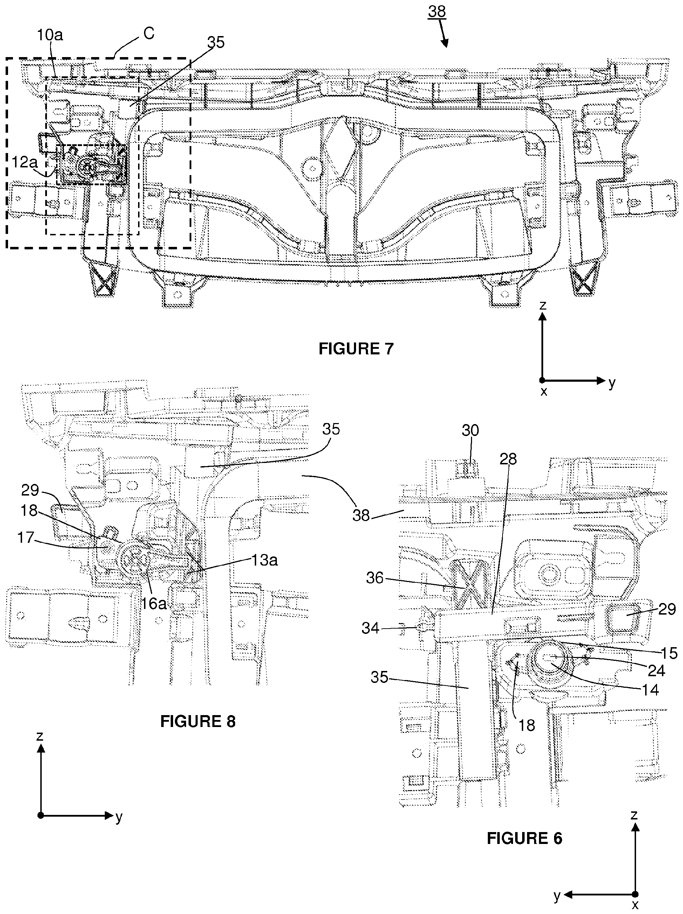

Sur la figure 3 est représentée une face avant de l'élément de structure 38 qui comporte le système d'ouverture/fermeture 10a, 10b du capot agencé au niveau d'un côté de cet élément de structure 38 situé à la partie A. Cette partie A de l'élément de structure 38 comprenant le système d'ouverture/fermeture 10a, 10b est visible à plus grande échelle sur la figure 6.

Le système 10a, 10b peut également être agencé au niveau de l'autre côté de cet élément de structure 38 localisé au niveau de la partie B.

On notera que l'élément de structure 38 peut aussi comprendre deux systèmes d'ouverture/fermeture 10a, 10b du capot agencés respectivement au niveau des parties A et B. Quel que soit la configuration, le système d'ouverture/fermeture 10a, 10b est situé de préférence dans la zone de la calandre du véhicule.

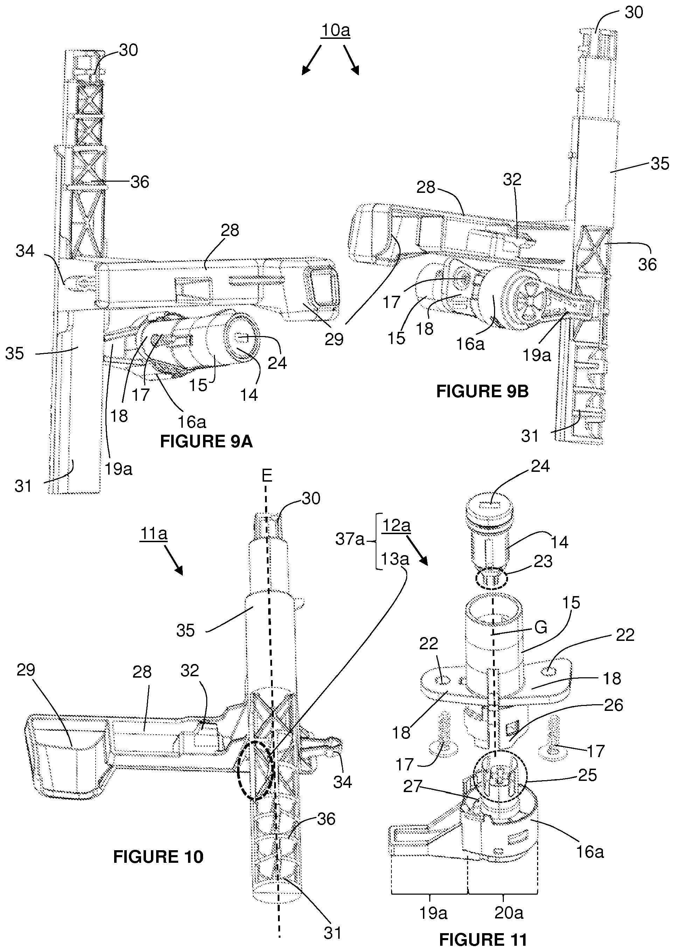

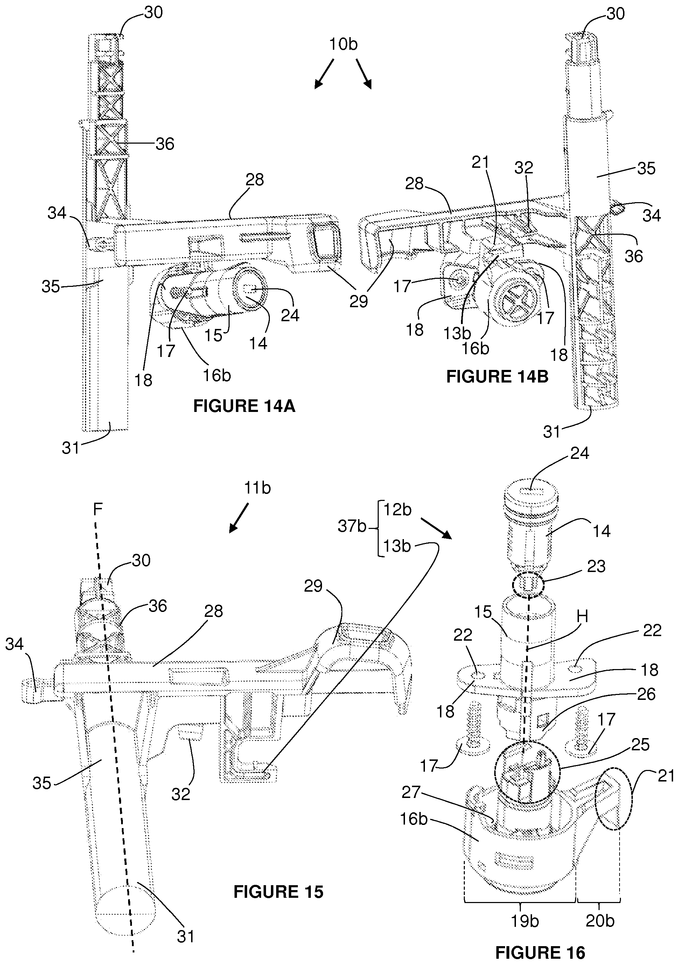

Ce système d'ouverture/fermeture 10a, 10b est visible notamment sur les figures 9A et 9B pour le premier mode de réalisation et sur les figures 14A et 14B pour le deuxième mode de réalisation. Ce système 10a, 10b comprend de manière non limitative et non exhaustive :
- un élément de manœuvre manuelle 11a, 11b, également appelé palette, est notamment mobile en rotation et apte à commander la mise en place du capot sur la caisse du véhicule, visible sur la figure 10 pour le premier mode de réalisation et la figure 15 pour le deuxième mode de réalisation, et
- un mécanisme de verrouillage/déverrouillage 37a, 37b de l'élément 11 a, 11b de manœuvre manuelle, visible sur la figure 11 pour le premier mode de réalisation et la figure 15 pour le deuxième mode de réalisation. L'élément 11 a, 11b de manœuvre manuelle est agencé dans l'élément de structure 38 de façon à être mobile en rotation. Cet élément 11 a, 11b de manœuvre manuelle comprend un corps 35 pourvu dans chacun des modes de réalisation de deux extrémités 30,31, visibles pour le premier mode de réalisation sur les figures 9A, 9B et 10, et pour le deuxième mode de réalisation sur les figures 14A, 14B et 15. Ce corps 35 peut avoir une forme sensiblement cylindrique et être creux en étant pourvu de nervures 36 de renfort qui visent à la rendre plus rigide.

La première extrémité 31 du corps 35 est agencée dans un logement de l'élément de structure 38 et la deuxième extrémité 30 qui est visible sur les figures 4, 5 et 6, traverse une paroi supérieure de l'élément de structure 38. Cette deuxième extrémité 30 est apte à recevoir un élément d'entraînement (non représenté) constitutif de l'élément 11 a, 11b de manœuvre manuelle. Comme cela est bien connu de l'état de l'art, cet élément d'entraînement en comprenant une surface de came est apte à agir sur un élément d'appui (non représenté) du capot afin de réaliser sa mise en place sur la caisse du véhicule et d'assurer son blocage sur cette caisse ou inversement son déblocage en fonction des manipulations qui sont réalisées au niveau de l'élément 11 a, 11b de manœuvre manuelle.

L'élément 11 a, 11b de manœuvre manuelle comprend également un élément d'actionnement 28 agencé sensiblement au milieu de son corps 35 et s'étendant sensiblement perpendiculairement par rapport à un axe E, F de ce corps 35.

L'élément d'actionnement 28 comprend deux extrémités. Une première extrémité pourvue d'un élément de préhension 29 et une deuxième extrémité comprenant un premier élément d'accroche 34, notamment une agrafe.

L'élément de préhension 29 permet de manipuler l'élément 11 a, 11b de manœuvre manuelle afin de faire varier par rotation la position de l'élément d'entraînement qui est apte à coopérer avec l'élément d'appui. Cet élément de préhension 29 est notamment visible sur les figures 9A, 9B et 10 pour le premier mode de réalisation et sur les figures 14A, 14B et 15 pour le deuxième mode de réalisation. L'élément de préhension 29 peut être manipulé à partir d'une ouverture qui peut être aménagée dans la calandre du véhicule. Cette ouverture pouvant être fermée par une trappe.

Le premier élément d'accroche 34 situé au niveau de la deuxième extrémité de l'élément d'actionnement 28, permet en coopérant avec un logement ayant une forme complémentaire aménagé dans l'élément de structure 38, que l'élément 11 a, 11b de manœuvre manuelle reste dans une position ouverte lorsque l'élément d'actionnement 28 a été manipulé pour provoquer l'ouverture du capot. Ce maintien réversible de l'élément 11 a, 11b de manœuvre manuelle dans cette position pouvant être réalisé par clipage. L'élément d'actionnement 28 comprend également au niveau de sa surface qui est en regard avec la paroi de l'élément de structure 38, lorsque le système d'ouverture fermeture 10a, 10b est en position fermée comme par exemple sur la figure 6, un deuxième élément d'accrochage 32. Ce deuxième élément d'accrochage 32 est visible sur les figures 9B et 10 pour le premier mode de réalisation et sur les figures 14B et 15 pour le deuxième mode de réalisation. Ce deuxième élément d'accrochage 32 est apte à coopérer avec un élément d'attache ayant une forme complémentaire à celle de ce deuxième élément d'accrochage 32, et qui est agencé dans un logement de l'élément de structure 38. Cette coopération entre l'élément d'attache et le deuxième élément d'accrochage 32 permet d'assurer le maintien réversible de l'élément 11 a, 11b de manœuvre manuelle dans une position fermée lorsque l'élément d'actionnement 28 a été manipulé pour provoquer la fermeture du capot. Ce maintien réversible de l'élément 11 a, 11b de manœuvre manuelle dans cette position peut être réalisé par clipage.

Ainsi que nous l'avons vu précédemment, le système d'ouverture/fermeture 10a, 10b comprend également le mécanisme de verrouillage/déverrouillage 37a, 37b du capot. Ce mécanisme 37a, 37b est prévu pour empêcher/autoriser la rotation de l'élément 11 a, 11b de manœuvre manuelle autour de son axe E, F. Ce mécanisme 37a, 37b comprend deux parties 12a, 12b, 13a, 13b correspondantes qui sont aptes à coopérer entre elles pour assurer un blocage/déblocage dudit élément 11 a, 11b de manœuvre manuelle.

La première partie 12a, 12b de ce mécanisme 37a, 37b est visible pour le premier mode de réalisation sur la figure 11 et pour le deuxième mode de réalisation sur la figure 16. Dans ces deux modes de réalisation, la première partie 12a, 12b de ce mécanisme 37a, 37b comprend un module de liaison 15, un bras mobile 16a, 16b et un dispositif de commande 14 du bras mobile 16a, 16b.

Le bras mobile 16a, 16b, également appelé batteuse, comprend un corps dont une partie 19a, 19b à une forme sensiblement cylindrique et comprend deux zones de fixation 25, 27 qui peuvent être coaxiales. Les première 25 et deuxième 27 zones de fixation sont respectivement aptes à réaliser une liaison mécanique avec le dispositif de commande 14 et le module de liaison 15. L'autre partie 20a, 20b de ce corps qui a une forme essentiellement allongée est prévue pour coopérer avec la deuxième partie 13a, 13b du mécanisme de verrouillage/déverrouillage 37a, 37b.

Dans le deuxième mode de réalisation, cette deuxième partie 20b du bras mobile 16b comprend une extrémité 21 libre qui est courbée, visible sur la figure 16.

Dans ces modes de réalisation, le dispositif de commande 14 correspond par exemple à un verrou qui est susceptible d'être actionné par une clef. En étant ainsi actionné, le verrou est alors apte à provoquer un mouvement de rotation du bras mobile 16a, 16b par rapport au module de liaison 15. Plus précisément, ce dispositif 14 comprend à une extrémité une ouverture 24 susceptible de recevoir la clef et à l'extrémité opposée un élément de liaison 23 qui est apte à être assemblé avec le bras mobile 16a, 16b au niveau de la première zone de fixation 25.

Le module de liaison 15 est dans ces deux modes de réalisation, formé par un corps creux cylindrique au travers duquel est compris le dispositif de commande 14 et la première zone de fixation 25, lorsque ce module de liaison 15 est monté sur le bras mobile 16a, 16b. Une extrémité 26 de ce corps creux comprend des éléments de liaison qui sont susceptibles d'assurer une liaison mécanique avec le bras mobile 16a, 16b au niveau de la deuxième zone de fixation 27. Ce module 15 comprend au niveau de la périphérie de sa paroi extérieure des supports de fixation 18, ici deux, qui sont compris dans un plan qui est perpendiculaire à l'axe G, H du corps du module de liaison 15. Ces supports de fixation 18 sont aptes à coopérer avec des composantes de fixation 17 afin d'assurer une liaison mécanique avec l'élément de structure 38. Pour ce faire, elles comprennent chacune un orifice 22 au travers duquel chaque composante de fixation 17 tel qu'une vis est insérée et fixée dans l'élément de structure 38.

Ainsi que nous l'avons vu, le mécanisme de verrouillage/déverrouillage 37a, 37b comprend la deuxième partie 13a, 13b. Cette deuxième partie 13a, 13b est apte à coopérer avec le bras mobile 16a, 16b, plus précisément avec la deuxième partie 20a, 20b, de ce bras mobile 16a, 16b.

Dans le premier mode de réalisation, la deuxième partie 13a de ce mécanisme 37a qui est visible sur la figure 10 correspond à une butée 13a qui est aménagée au niveau de l'axe E du corps 35 de l'élément 11a de manœuvre manuelle. Cette butée 13a est agencée sur le corps 35 de l'élément 11a de manœuvre manuelle entre l'élément d'actionnement 28 et la première extrémité 31 de l'élément 11a de manœuvre manuelle, plus précisément à proximité de l'élément d'actionnement 28. Cette butée 13a présente une forme qui est complémentaire à une extrémité libre de la deuxième partie 20a du bras mobile 16a.

Dans le deuxième mode de réalisation, cette deuxième partie 13b du mécanisme est visible sur la figure 15 et correspond à une butée 13b qui a une forme en U, proche de celle d'un crochet. Cette forme de la butée 13b est complémentaire à celle de l'extrémité libre 21 du bras mobile 16b. La coopération entre le bras mobile 16b et la butée 13b permet de fournir un couple résistant à l'effort qui est apte à s'opposer à un couple appliqué manuellement sur l'axe F de l'élément 11b de manœuvre manuelle .

Cette butée 13b est agencée sur la même surface de l'élément d'actionnement 28 que le deuxième élément d'accrochage 32. On notera d'ailleurs que ce deuxième élément d'accrochage 32 est situé sur l'élément d'actionnement 28 entre cette butée 13b et le corps 35 de l'élément 11b de manœuvre manuelle.

La présente invention n'est pas limitée aux modes de réalisation qui ont été explicitement décrits, mais elle en inclut les diverses variantes et généralisations contenues dans le domaine des revendications ci-après.

## Revendications

1. Système d'ouverture/fermeture (10a, 10b) d'un capot de véhicule comprenant un élément (11a, 11b) de manœuvre manuelle, notamment mobile en rotation sur un élément de structure (38), apte à commander la mise en place du capot sur une caisse du véhicule, un mécanisme de verrouillage/déverrouillage (37a, 37b) de l'élément de manœuvre (11a, 11b), ledit élément (11a, 11b) de manœuvre manuelle comprenant un corps (35) pourvu d'un élément d'actionnement (28), notamment un levier, **caractérisé en ce que** sur l'élément d'actionnement est situé un élément (32, 34) d'accroche ou d'accrochage destiné à coopérer avec l'élément de structure (38) afin de maintenir l'élément (11a, 11b) de manœuvre manuelle dans une position ouverte ou fermée de maintien réversible lorsque l'élément d'actionnement (28) a été manipulé.

2. Système (10a, 10b) selon la revendication précédente, **caractérisé en ce que** le mécanisme de verrouillage/déverrouillage (37a, 37b) comprend une première partie et une deuxième partie (12a, 12b, 13a, 13b) qui sont aptes à coopérer entre elles pour assurer le blocage dudit élément (11a, 11b) de manœuvre manuelle.

3. Système (10a, 10b) selon la revendication 1 ou 2, **caractérisé en ce qu'**une première partie (12a, 12b) du mécanisme de verrouillage/déverrouillage (37a, 37b) comprend un module de liaison (15), un bras mobile (16a, 16b) et un dispositif de commande (14) dudit bras mobile (16a, 16b).

4. Système (10a, 10b) selon l'une quelconque des revendications précédentes, **caractérisé en ce que** l'élément (11a, 11b) de manœuvre manuelle et un module de liaison (15) sont montés dans un élément de structure (38), notamment un renfort de bouclier du véhicule.

5. Système (10a, 10b) selon l'une quelconque des revendications précédentes, **caractérisé en ce qu'**un module de liaison (15) est apte à relier un bras mobile (16a, 16b) et un dispositif de commande (14) à un élément de structure (38) du véhicule.

6. Système (10b) selon l'une quelconque des revendications précédentes, **caractérisé en ce qu'**une deuxième partie (13b) du mécanisme de verrouillage/déverrouillage (37b) comprend une butée agencée au niveau d'un élément d'actionnement (28) de l'élément (11b) de manœuvre manuelle.

7. Système (10b) l'une quelconque des revendications précédentes, **caractérisé en ce qu'**un bras mobile (16b) est pourvu d'une extrémité libre (21) qui est courbée.

8. Système (10b) selon la revendication précédente, **caractérisé en ce qu'**une butée agencée sur un élément d'actionnement (28) a une forme en U complémentaire à celle de l'extrémité libre d'un bras mobile (16b).

9. Véhicule comprenant un système d'ouverture/fermeture (10a, 10b) d'un capot selon l'une quelconque des revendications 1 à 8.

## Patentansprüche

1. System zum Öffnen/Schließen (10a, 10b) einer Fahrzeugmotorhaube, beinhaltend ein manuelles Bedienelement (11a, 11b), das insbesondere an einem Strukturelement (38) drehbar ist und fähig ist, das Aufsetzen der Motorhaube auf einer Karosserie des Fahrzeugs zu steuern, einen Verriegelungs-/Entriegelungsmechanismus (37a, 37b) des Bedienelements (11a, 11b), wobei das manuelle Bedienelement (11a, 11b) einen Körper (35) beinhaltet, der ein Betätigungselement (28), insbesondere einen Hebel, aufweist, **dadurch gekennzeichnet, dass** an dem Betätigungselement ein Rast- oder Einrastelement (32, 34) angeordnet ist, das dazu bestimmt ist, mit dem Strukturelement (38) zusammenzuwirken, um das manuelle Bedienelement (11a, 11b) in einer offenen oder geschlossenen reversiblen Halteposition zu halten, wenn das Betätigungselement (28) bedient worden ist.

2. System (10a, 10b) nach dem vorhergehenden Anspruch, **dadurch gekennzeichnet, dass** der Verriegelungs-/Entriegelungsmechanismus (37a, 37b) einen ersten Teil und einen zweiten Teil (12a, 12b, 13a, 13b) beinhaltet, die fähig sind, untereinander zusammenzuwirken, um das Blockieren des manuellen Bedienelements (11a, 11b) zu gewährleisten.

3. System (10a, 10b) nach Anspruch 1 oder 2, **dadurch gekennzeichnet, dass** ein erster Teil (12a, 12b) des Verriegelungs-/Entriegelungsmechanismus (37a, 37b) ein Verbindungsmodul (15), einen mobilen Arm (16a, 16b) und eine Steuerungsvorrichtung (14) für den mobilen Arm (16a, 16b) beinhaltet.

4. System (10a, 10b) nach einem der vorhergehenden Ansprüche, **dadurch gekennzeichnet, dass** das manuelle Bedienelement (11a, 11b) und ein Verbindungsmodul (15) in einem Strukturelement (38), insbesondere einem Stoßfängerträger des Fahrzeugs, montiert sind.

5. System (10a, 10b) nach einem der vorhergehenden Ansprüche, **dadurch gekennzeichnet, dass** ein Verbindungsmodul (15) fähig ist, einen mobilen Arm (16a, 16b) und eine Steuerungsvorrichtung (14) mit einem Strukturelement (38) des Fahrzeugs zu verbinden.

6. System (10b) nach einem der vorhergehenden Ansprüche, **dadurch gekennzeichnet, dass** ein zweiter Teil (13b) des Verriegelungs-/Entriegelungsmechanismus (37b) einen Anschlag beinhaltet, der im Bereich eines Betätigungselements (28) des manuellen Bedienelements (11b) angeordnet ist.

7. System (10b) nach einem der vorhergehenden Ansprüche, **dadurch gekennzeichnet, dass** ein mobiler Arm (16b) ein freies Ende (21) aufweist, das gebogen ist.

8. System (10b) nach dem vorhergehenden Anspruch, **dadurch gekennzeichnet, dass** ein Anschlag, der an einem Betätigungselement (28) angeordnet ist, eine U-Form aufweist, die zu der Form des freien Endes eines mobilen Arms (16b) komplementär ist.

9. Fahrzeug, das ein System zum Öffnen/Schließen (10a, 10b) einer Motorhaube nach einem der Ansprüche 1 bis 8 beinhaltet.

## Claims

1. System (10a, 10b) for opening/closing a vehicle bonnet, comprising a manual operating element (11a, 11b), in particular rotatable on a structural element (38), able to control the placing of the bonnet on a body of the vehicle, and a mechanism (37a, 37b) for locking/unlocking the operating element (11a, 11b), said manual operating element (11a, 11b) comprising a body (35) provided with an actuating element (28), in particular a lever, **characterized in that** a catching or fastening element (32, 34) is situated on the actuating element and intended to cooperate with the structural element (38) in order to retain the manual operating element (11a, 11b) in a reversibly retained open or closed position when the actuating element (28) has been manipulated.

2. System (10a, 10b) according to the preceding claim, **characterized in that** the locking/unlocking mechanism (37a, 37b) comprises a first part and a second part (12a, 12b, 13a, 13b) which are able to cooperate with one another in order to block said manual operating element (11a, 11b).

3. System (10a, 10b) according to Claim 1 or 2, **characterized in that** a first part (12a, 12b) of the locking/unlocking mechanism (37a, 37b) comprises a connection module (15), a movable arm (16a, 16b) and a device (14) for controlling said movable arm (16a, 16b).

4. System (10a, 10b) according to any one of the preceding claims, **characterized in that** the manual operating element (11a, 11b) and a connection module (15) are mounted in a structural element (38), in particular a vehicle bumper reinforcement.

5. System (10a, 10b) according to any one of the preceding claims, **characterized in that** a connection module (15) is able to connect a movable arm (16a, 16b) and a control device (14) to a structural element (38) of the vehicle.

6. System (10b) according to any one of the preceding claims, **characterized in that** a second part (13b) of the locking/unlocking mechanism (37b) comprises a stop arranged at the level of an actuating element (28) of the manual operating element (11b).

7. System (10b) according to any one of the preceding claims, **characterized in that** a movable arm (16b) is provided with a free end (21) which is curved.

8. System (10b) according to the preceding claim, **characterized in that** a stop arranged on an actuating element (28) has a U shape complementary to that of the free end of a movable arm (16b).

9. Vehicle comprising a system (10a, 10b) for opening/closing a bonnet according to any one of Claims 1 to 8.
